# EUROPÄISCHE PATENTSCHRIFT

(11) **EP 1 544 564 B1**
(45) Veröffentlichungstag und Bekanntmachung des Hinweises auf die Patenterteilung: **17.05.2017**
(21) Anmeldenummer: 04027604.0
(22) Anmeldetag: 20.11.2004
(51) Int. Cl.: F28F 3/02

(54) **Wärmeübertrager mit flachen Rohren und flaches Wärmeübertragerrohr**
Heat exchanger with flat tubes and flat heat exchanger tube
Echangeur de chaleur à tubes plats et tube plat pour échangeur de chaleur

(30) Priorität: 19.12.2003 DE 10359806
(43) Veröffentlichungstag der Anmeldung: 22.06.2005
(73) Patentinhaber: Modine Manufacturing Company, Racine, Wisconsin 53403-2552 (US)
(72) Erfinder: Ambros, Peter, 72127 Kusterdingen (DE); Soldner, Jörg, Dr.-Ing., 71139 Ehningen (DE); Strähle, Roland, Dipl.-Ing. (FH), 72669 Unterensingen (DE); Stolz, Andreas, Dipl.-Ing., 72141 Walddorf-Häslach (DE); Merz, Dieter, Dipl.-Physiker, 72359 Dotternhausen (DE); Nies, Jens, Dipl.-Ing., 71088 Holzgerlingen (DE); Thumm, Sven, Dr.-Ing., 72555 Metzingen (DE); Müller, Katja, Dr.-Ing., 71034 Böblingen (DE); Schatz, Harald, Dipl.-Ing., 72766 Reutlingen (DE); Kottal, Peter C., Racine Wisconsin 53405 (US); Grippe, Frank M., Kansasville 53139 (US)
(74) Vertreter: Wolter, Klaus-Dietrich

(56) Entgegenhaltungen:
- EP-A- 0 704 667
- EP-A- 0 974 804
- WO-A-2004/085947
- DE-A1- 10 040 645
- DE-A1- 10 238 882
- DE-A1- 19 519 633
- DE-A1- 19 644 584
- DE-A1- 19 651 625
- DE-U1- 20 003 919

## Beschreibung

Die Erfindung betrifft einen Wärmeübertrager mit einem Einlasssammelkasten, um das heiße Medium in flache Wärmeübertragerrohre zu verteilen bzw. mit einem Auslasssammelkasten, um das Medium aus den flachen Wärmeübertragerrohren aufzunehmen und weiterzuleiten, wobei der Sammelkasten eine einen Ausschnitt besitzende Wand aufweist, die sich um den gesamten Umfang des Endes eines Stapels der Wärmeübertragerrohre und über einen gewissen, von zwei Verbindungsebenen begrenzten, Längenabschnitt der Wärmeübertragerrohre erstreckt, wobei die Wand wenigstens einen Einlass und / oder einen Auslass für das Kühlmedium, welches zwischen den Wärmeübertragerrohren strömt, besitzt, und wobei in den flachen Wärmeübertragerrohren ein Inneneinsatz angeordnet ist, der mit beiden Breitseiten des Wärmeübertragerrohres metallisch verbunden ist.

Ein Wärmeübertrager wurde in der europäischen Patentanmeldung beschrieben, die demnächst mit der Veröffentlichungsnummer EP 1 376 043 A2 erscheinen wird. Hier ist der Sammelkasten für das eine Medium einteilig mit dem Sammelkasten für das andere Medium ausgeführt.

Im EP 974 804 B1, das derselben Anmelderin gehört, hat man eine mehrteilige Gestaltung bevorzugt. Der Sammelkasten für das eine Medium ist mit dem Sammelkasten für das andere Medium zusammengefügt und gemeinsam mit den übrigen Teilen des Wärmeübertragers im Lötofen verbunden worden. Der Wärmeübertrager aus dieser Referenz entspricht dem Oberbegriff des Anspruchs 1. Dieser Wärmeübertrager führt im Zuge seiner Herstellung zu löttechnischen Schwierigkeiten.

Es hat sich erwiesen, dass Wärmeübertrager, wenn sie beispielsweise als Abgaswärmeübertrager in einer Abgasrückführungsanlage eines Kraftfahrzeugs eingebaut sind, den enormen Temperaturwechselbelastungen nicht ausreichend widerstehen können. Im Allgemeinen handelt es sich dabei bekanntlich um ein Problem, das seit dem Beginn des Baus von Wärmeübertragern existiert. Deshalb gibt es zahlreiche Lösungsvorschläge und Maßnahmen, die jedoch das Problem nicht aus der Welt schaffen, sondern lediglich für ganz konkrete Anwendungen mehr oder weniger ausreichende Verbesserungen zur Verfügung stellen können.

In der DE 200 03 919U1 wird ein Wärmeaustauscher für Hochtemperaturanwendungen vorgeschlagen. Der Wärmeaustauscher besitzt Kaltluftdurchgänge, in denen sich Lamellen befinden und Durchgänge für ein heißes Medium. Ferner ist ein Sammelkasten vorgesehen, der fest mit den Einströmenden der Durchgänge verbunden ist. Die Lamellen besitzen eine Zuganker-Wirkung. Um den Wärmeaustauscher hinsichtlich seiner Temperaturwechselbelastungsfähigkeit zu verbessern, wurde dort vorgesehen, die Zuganker-Wirkung der Lamellen in an den Sammelkasten angrenzenden Bereichen durch verschiedene, dort gezeigte und beschriebene Maßnahmen aufzuheben.

Die Erfinder haben sich ebenfalls die Aufgabe gestellt, den eingangs beschriebenen Wärmeübertrager so auszugestalten, dass er den enormen Temperaturwechselbelastungen, beispielsweise bei einem Abgaswärmeübertrager in einer Abgasrückführungsanlage, besser widerstehen kann, und somit die an ihn gestellten Anforderungen erfüllt. Außerdem sollen die löttechnischen Probleme abgeschwächt werden.

Diese Aufgabe wird bei einem Wärmeübertrager gemäß dem Oberbegriff erfindungsgemäß durch den Einsatz der kennzeichnenden Merkmale des Anspruchs 1 gelöst.

Bei flachen Wärmeübertragerrohren kann es sich beispielsweise um mit einer Längsnaht geschweißte oder um gezogene Flachrohre handeln, die Teil des Wärmeübertragers sind. Zwischen den Flachrohren sind Wellrippen angeordnet, durch die beispielsweise Kühlluft hindurchströmt. Die Enden der Wärmetauscherrohre stecken beispielsweise in Öffnungen eines Rohrbodens, der mit der Wand eines Sammelkastens verbunden ist. Das ist die aus dem Stand der Technik bekannte Bauweise, beispielsweise eines luftgekühlten Ladeluftkühlers oder eines Kühlmittelkühlers für ein Kraftfahrzeug. Im Bereich der Enden der Wärmeübertragerrohre weist der Inneneinsatz einen Einschnitt auf. Flache Wärmeübertragerrohre sind solche, die eine kleinere und eine größere Innenabmessung aufweisen, also nicht nur solche mit parallelen Breitseiten sondern beispielsweise auch Wärmeübertragerrohre mit ovalem Querschnitt. Der Einschnitt im Inneneinsatz kann entweder durch ein in das Ende des Wärmeübertragerrohres eingesetztes Rohrstück mit einem Einsatz ersetzt werden, oder er kann zusätzlich vorgesehen werden.

Weil der Inneneinsatz gemäß Anspruch 1 im Bereich der unmittelbaren oder mittelbaren Verbindung an den zwei Verbindungsebenen des Stapels der Wärmeübertragerrohre mit der Wand des Sammelkastens Längenänderungen in Stapelrichtung der Wärmeübertragerrohre gestattet, wurde die Widerstandsfähigkeit des erfindungsgemäßen Wärmeübertragers gegen Temperaturwechselbelastungen im Vergleich mit dem vorne genannten Stand der Technik um das Zwei - Dreifache gesteigert, wie die Auswertung durchgeführter umfangreicher Versuchsreihen gezeigt hat.

Es gibt verschiedene Ausführungen, die eine Längenänderung des Inneneinsatzes in Stapelrichtung der Wärmeübertragerrohre gestatten. Eine vorteilhafte Ausführung besteht darin, dass der Inneneinsatz wenigstens einen vorzugsweise etwa quer zur Stapelrichtung verlaufenden Einschnitt aufweist. Diese Maßnahme scheint fertigungstechnisch einfach und sehr kostengünstig zu sein. Der wellenförmige Inneneinsatz wird wenigstens ein Stück weit in Richtung seiner Längserstreckung aufgetrennt. Der Einschnitt liegt vorzugsweise etwa in der Mitte der Höhe des Inneneinsatzes, wobei die erwähnte Höhe etwa der kleineren Innenabmessung der Wärmeübertragerrohre entspricht. Wellenförmige Inneneinsätze im Sinne dieses Vorschlages sind solche, deren Wellenflanken sich unter Umkehr der Laufrichtung zwischen Wellenbergen und Wellentälern erstrecken. Die Ausbildung der Wellenflanken selbst ist ohne Belang und kann demzufolge in vielfältiger Weise vorliegen. Vorteilhaft ist es, wenn die Wellenflanken in Längsrichtung des Inneneinsatzes ebenfalls gewellt ausgebildet sind. Der Einschnitt trennt die Wellenflanken ein Stück weit auf.

Eine wirkungsvolle Weiterbildung besteht darin, dass der Einschnitt ein V - förmiger Ausschnitt ist, der sich zum naheliegenden Ende des Stapels der Wärmeübertragerrohre hin öffnet.

Eine weitere Ausführung wird darin gesehen, dass die Wellenflanken des Inneneinsatzes in Stapelrichtung nachgiebig sind, beispielsweise ebenfalls gewellt ausgebildet sind.

Bei Wärmeübertragerrohren besonders großer Länge, kann es günstig sein, den Inneneinsatz aus mehreren einzelnen Inneneinsätzen zusammenzusetzen, bzw. zu "stückeln". In solchen Fällen ist es dann von Vorteil, an beiden Enden der einzelnen Stücke der Inneneinsätze jeweils einen Einschnitt vorzusehen. Damit wird bei der Montage der Wärmeübertragerrohre eine Vereinfachung erreicht, weil nicht darauf geachtet werden muss, den Inneneinsatz mit dem "richtigen" Ende in die Wärmeübertragerrohre einzusetzen.

Eine zusätzliche oder alternative in Richtung der Lösung der Aufgabenstellung wirkende Maßnahme besteht darin, dass in die Enden der Wärmeübertragerrohre passende Rohrstücke eingesetzt sind, die die Wärmeübertragerrohre verstärken, wobei die Rohrstücke mit Stegen ausgestattet sind, die Längenänderungen in Stapelrichtung der Wärmeübertragerrohre erlauben. Die Stege weisen eine Kontur, beispielsweise eine bogenförmige oder zickzack - förmige Kontur, auf und sind deshalb unter Temperaturwechselbelastungen in Stapelrichtung der Wärmeübertragerrohre nachgiebig. Es hat sich erwiesen, dass diese Stege auch deshalb vorteilhaft sind, weil sie verhindern, dass die Breitseiten der Rohrstücke beim Löten "einfallen". Die Stege tragen somit zu hochwertigen Lötverbindungen bei. Die Rohrstücke lassen sich besonders günstig durch Zuschneiden auf Länge von gezogenen oder geschweißten Flachrohren mit einem entsprechenden Einsatz herstellen

Die Rohrstücke schließen sich in den Wärmeübertragerrohren an den Inneneinsatz an und erstrecken sich etwa über den Längenabschnitt der Wärmeübertragerrohre, der von der Wand umfasst ist.

Die Rohrstücke haben sich sogar in mehrfacher Hinsicht als vorteilhaft erwiesen. Zunächst deshalb, weil es relativ schwierig ist, qualitätsgerechte Lötverbindung zu erzielen, wenn die Wanddicke zu verbindender Teile stark unterschiedlich ist, wie es beispielsweise zwischen einem Rohrboden / Sammelkasten und einem Wärmeübertragerrohr der Fall ist. Die erforderliche Löttemperatur wird bei den dünnwandigen Teilen früher erreicht als bei den dickeren Teilen, worin die löttechnischen Probleme ihre Ursache haben könnten. Die Wärmeübertragerrohre sollen jedoch aus Gründen des effizienten Wärmeübergangs nur einige Zehntel Millimeter Wanddicke aufweisen, während die Rohrböden / Sammelkästen wegen der von ihnen erwarteten Festigkeit bis zu 2,0 mm Dicke besitzen können. Die Rohrstücke bewirken einen Ausgleich der Wanddicken und versprechen somit bessere Lötergebnisse. Ferner scheint es möglich zu sein, durch den Einsatz solcher Rohrstücke die Wanddicke der Wärmeübertragerrohre noch weiter reduzieren zu können, um damit neben einem effizienteren Wärmeübergang zusätzlich einen Kostenvorteil zu bewirken.

Die Wärmeübertragerrohre sind in einem Ausführungsbeispiel vorzugsweise durch jeweils zwei und besonders bevorzugt durch zwei identische Flachrohrhälften gebildet, die an ihren Randflanschen verbunden sind. Dieses Konzept ist besonders kostengünstig und zeichnet sich durch hohe Prozesssicherheit, insbesondere beim Löten aus.

Die Wärmeübertragerrohre weisen in diesem Ausführungsbeispiel Ausprägungen auf, die für einen Abstand zwischen den Wärmeübertragerrohren sorgen, wobei der Abstand jeweils einen Strömungskanal für das andere Medium bildet.

Die Ausprägungen schließen die Strömungskanäle für das andere Medium nach außen ab. Dadurch wird ein weitgehend gehäuseloses Bauprinzip realisiert, das sich durch sparsamen Materialeinsatz bei höchster Effizienz des Wärmeaustausches auszeichnet.

Die Wand des Sammelkastens besitzt Verformungen, die einerseits ein Beitrag zur Stabilität sind und andererseits eine gewisse Elastizität bei Temperaturwechselbelastungen gestatten.

Eine weitere zusätzliche in Richtung der Lösung der Aufgabenstellung wirkende Maßnahme besteht darin, dass im Einlasssammelkasten ein Hitzeschutzschild in der Art eines geschlitzten Bleches in optimiertem Abstand vor dem Eintritt des Mediums in die Wärmeübertragerrohre angeordnet und mit der Wand verbunden ist.

Jeder Schlitz im Hitzeschutzschild ist jeweils der Öffnung eines Wärmeübertragerrohres zugeordnet ist, und er ist geringfügig kleiner ausgebildet als die Öffnung des Wärmeübertragerrohres.

Bei dem erfindungsgemäßen Wärmeübertrager ist der von der Wand des Sammelkastens umschlossene Längenabschnitt der Wärmeübertragerrohre von zwei Verbindungsebenen der Wand mit dem Ende des Stapels der Wärmeübertragerrohre begrenzt, wobei zwischen den Verbindungsebenen der Einlass und / oder der Auslass für das andere Medium angeordnet sind / ist

Bei einem ersten Ausführungsbeispiel ist in der ersten Verbindungsebene ein Rohrboden mit Stegen zur Aufnahme der Enden des Stapels der Wärmeübertragerrohre vorgesehen, der mit der Wand des Sammelkastens verbunden ist.

Ein zweites Ausführungsbeispiel weist anstelle des Rohrbodens in der ersten Verbindungsebene ein die Umfangskontur des Stapels der Wärmeübertragerrohre darstellendes Zwischenstück auf, das mit der Wand verbunden ist.

Die zweite Verbindungsebene ist unmittelbar durch die Wand des Sammelkastens gebildet, wobei erfindungsgemäß in der Wand die Umfangskontur des Stapels der Wärmeübertragerrohre ausgebildet ist. Dadurch kann die Wand in kostengünstiger Weise als ein Stanz - und Tiefziehteil hergestellt werden. In der Umfangskontur sind Schlitze vorhanden. In jedem Schlitz befindet sich ein Randflansch eines Wärmeübertragerrohres. Ferner sind Vorsprünge in der Umfangskontur ausgebildet. Jeder Vorsprung verschließt eine Furche, die jeweils am Rand zwischen zwei angrenzenden Wärmeübertragerrohren ausgebildet ist. Mit diesen Maßnahmen wird ein Beitrag zur Erzielung qualitätsgerechter Lötergebnisse geleistet.

Bei dem erwähnten zweiten Ausführungsbeispiel sind die Breitseiten der Wärmeübertragerrohre im Bereich der zweiten Verbindungsebene mit weiteren Ausformungen versehen, wobei benachbarte Wärmeübertragerrohre mit den weiteren Ausformungen aneinander anliegen und wobei die Höhe der weiteren Ausformungen und die Höhe der Ausprägung übereinstimmen, um die Strömungskanäle zwischen den Wärmeübertragerrohren zur Verfügung zu stellen. Besonders vorteilhaft ist es, wenn Scharen von Ausformungen im Bereich des Eintritts und/oder Austritts der zwischen den Wärmeübertragerrohren vorhandenen Strömungskanäle angeordnet sind und das Medium lenken, um beispielsweise den Rohrboden zu kühlen. Damit kann ein weiterer zusätzlicher Beitrag zur Lösung der Aufgabenstellung geleistet werden. Da die Ausformungen verlötet sind, stellen sie natürlich auch einen Beitrag zur Festigkeit dar.

Die Erfindung wird nachfolgend in Ausführungsbeispielen anhand der beigefügten Zeichnungen beschrieben. Die Beschreibung kann weitere Merkmale und Wirkungen enthalten, die sich möglicherweise erst später als besonders bedeutsam herausstellen.

Die Figuren zeigen Folgendes:
Fig. 1 Gesamtansicht auf einen Wärmeübertrager eines Ausführungsbeispiels;
Fig. 2 Perspektivische Ansicht eines Sammelkastenteils des Ausführungsbeispiels;
Fig. 3 Teil eines Wärmeübertragerrohres;
Fig. 4 Teilweise geschnittene Ansicht eines Teils des Wärmeübertragers;
Fig. 5 und 6 Ähnlich Fig. 4, jedoch bei einem weiteren Ausführungsbeispiel;
Fig. 7 Ein drittes Ausführungsbeispiel in einer Darstellung ähnlich der Fig. 4;
Fig. 8 Teil eines in Fig. 7 eingesetzten Wärmeübertragerrohres;
Fig. 9 Teil eines Wärmeübertragerrohres eines anderen Ausführungsbeispiels;
Fig. 10 Perspektivansicht eines Einzelteils, das im Zusammenhang mit dem Ausführungsbeispiel aus Fig. 9 einsetzbar ist;
Fig. 11 Wärmeübertager des Ausführungsbeispiels aus den Fig. 9 und 10 in Explosionsdarstellung;
Fig. 12 Hitzeschutzschild im Sammelkasten;
Fig. 13 und 14 -ein Wärmeübertragerrohr mit Inneneinsatz;
Fig. 15 und 16 - ein anderes Wärmeübertragerrohr mit Inneneinsatz;
Fig. 17 Teil eines anderen Inneneinsatzes;
Fig. 18 Teilansicht eines nicht erfindungsgemäßen Ladeluftkühlers mit Inneneinsätze aufweisenden Wärmeübertagerrohren;

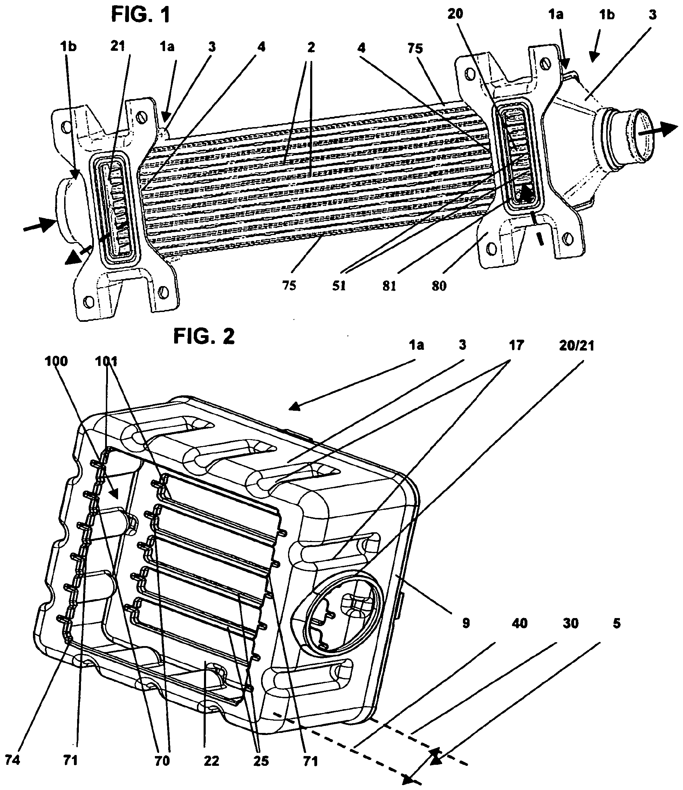

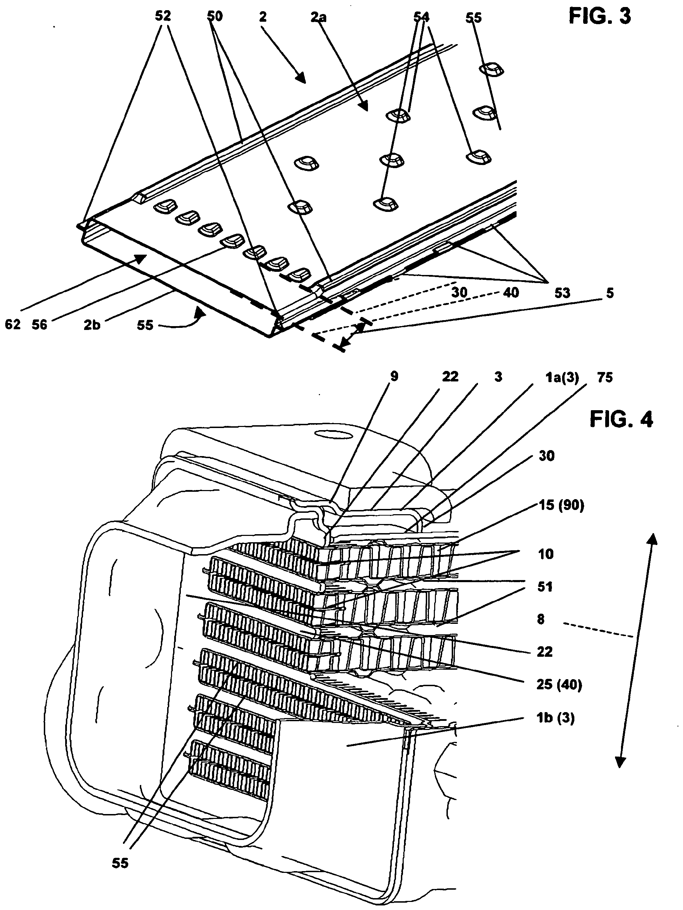

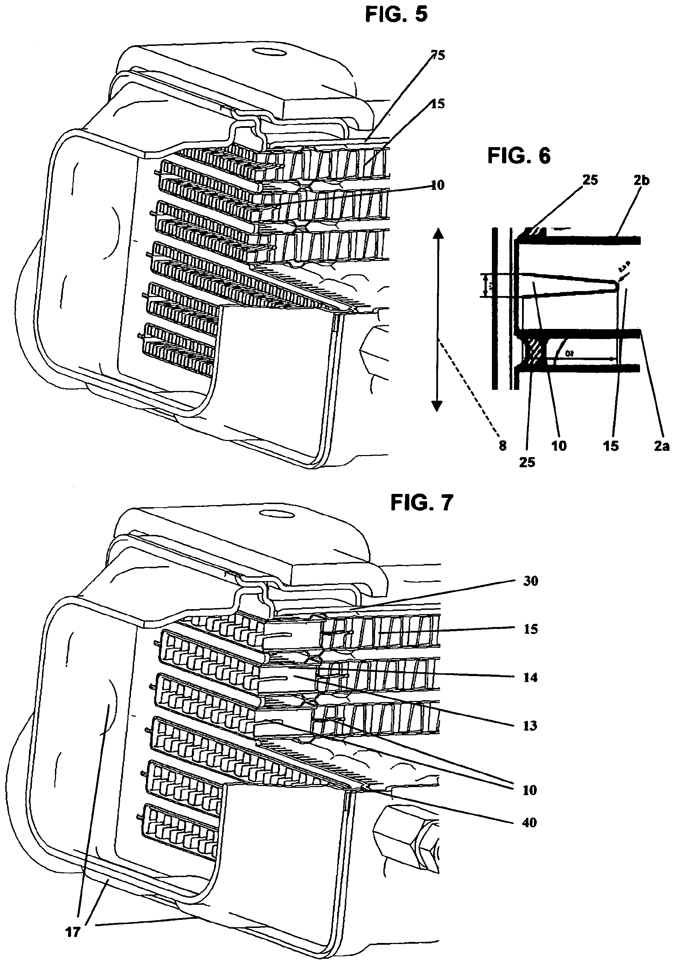

Es handelt sich in den Ausführungsbeispielen aus den Fig. 1 - 12 um einen Abgaswärmeübertrager, der in nicht gezeigter Weise in das Abgasrückführungssystem eines Kraftfahrzeuges eingebunden ist und der die Kühlflüssigkeit des Kraftfahrzeugmotors als Kühlmedium benutzt. Mit den gleichen Vorteilen ist der Wärmeübertrager beispielsweise als mittels Kühlflüssigkeit gekühlter Ladeluftkühler zu verwenden oder für andere Zwecke insbesondere dort mit Vorteilen einzusetzen, wo hohe Temperaturwechselbelastungen auftreten.
Die vorliegende Erfindung soll durchaus auch so verstanden werden, dass der Wärmeübertrager u - förmig durchströmt werden kann, wobei sich der Einlass **20** und der Auslass **21** an ein und demselben Sammelkasten **1a** befinden. Auch aus diesem Grund ist im Oberbegriff des Anspruchs 1 von einem Einlasssammelkasten **1** bzw. einem Auslasssammelkasten die Rede. In den die Ausführungsbeispiele zeigenden Figuren ist hingegen vorgesehen, an beiden Enden **4** des Stapels der Wärmeübertragerrohre **2** je einen Sammelkasten **1** anzuordnen. Demzufolge strömt bei dem Wärmeübertrager, der in der Fig. 1 gezeigt ist, das Abgas beispielsweise am linken Sammelkasten **1b** ein, verteilt sich auf die Wärmeübertragerrohre **2,** durchströmt dieselben und verlässt den Wärmeübertrager über den anderen, rechten Sammelkasten **1b.** Die Kühlflüssigkeit tritt in den Eintritt **20** am rechten Sammelkasten **1a** ein, verteilt sich auf die Strömungskanäle **51,** die zwischen den Wärmeübertragerrohren **2** angeordnet sind (Fig.4) und verlässt den Wärmeübertrager über den im linken Sammelkasten **1a** vorgesehenen Austritt **21.** Der Eintritt **20** und der Austritt **21** haben in diesem Ausführungsbeispiel einen etwa rechteckigen Querschnitt. In vorteilhafter Weise wurde an den Sammelkästen **1a** jeweils eine mittels Umformverfahren aus Blech gefertigte Halterung **80** vorgesehen, die sich um drei Seiten der Sammelkästen **1a** erstreckt und damit fest verlötet ist. Die Halterung **80** weist den Eintritt **20** bzw. den Austritt **21** und eine geeignete Dichtungsnut **81** auf, so dass der Wärmeübertrager unmittelbar an eine nicht gezeigte Anschlussebene eines Aggregats angeflanscht, somit befestigt und gleichzeitig mit Kühlflüssigkeit versorgt" werden kann. Der Stapel aus Wärmeübertragerrohren **2** wird von einer oberen und einer unteren Verstärkungsplatte **75** abgedeckt, weil die Blechdicke der Wärmeübertragerrohre **2** relativ klein ist. Es soll damit sowohl ein Schutz vor mechanischer Einwirkung auf die Rohre **2** als auch eine höhere Stabilität des gesamten Wärmeübertragers erreicht werden.
Die Fig. 2 zeigt den Sammelkasten **1a** in einem ersten Ausführungsbeispiel in einer perspektivischen Ansicht, wie er im Ausführungsbeispiel aus der Fig. 1 zweifach vorhanden ist, abgesehen von der Querschnittsform des Einlasses **20** bzw. Auslasses **21,** die in der Fig. 1 etwa rechteckig und in der Fig. 2 rund ist. Die Fig. 3 zeigt eines der dort vorhandenen sieben Wärmeübertragerrohre **2.** Die Wand **3** des Sammelkastens **1a** weist Verformungen **17** auf, die übrigens auch in der Wand **3** des Sammelkastens **1 b** vorgesehen werden können. (Fig.1) Ferner gibt es zwei Verbindungsebenen **30** und **40** zwischen der Wand **3** und dem Stapel der Wärmeübertragerrohre **2.** In der einen Verbindungsebene **30** ist eine unmittelbare Verbindung der Wand **3** mit dem Stapel vorgesehen. Die Wand **3** besitzt einen Ausschnitt **100,** der die Umfangskontur des Stapels repräsentiert. Dazu gehören Schlitze **70** und Vorsprünge **71.** Jeder Schlitz **70** ist zur Aufnahme eines Randflansches **52** gedacht, der in Fig. 3 gezeigt ist. Außerdem gehört zu dem Ausschnitt **100** eine obere und eine untere Abstufung **74,** um die Verstärkungsplatten **75** ebenfalls darin aufnehmen zu können. In der anderen Verbindungsebene **40** hingegen ist eine mittelbare Verbindung zur Wand **3** vorhanden, da in diesem Ausführungsbeispiel ein dazwischengeschalteter Rohrboden **22** vorgesehen wurde. Zu diesem Zweck wurde der Rand der Wand **3** bei **9** abgestuft, damit der Rohrboden **22** einen Sitz mit einem Anschlag in der Wand **3** hat. Die bereits erwähnten Schlitze **70** finden sich auch in der Kontur des Rohrbodens **22** wieder, und sie dienen dort dem gleichen Zweck.
Aus der Fig. 2 ist eine bemerkenswerte Ausbildung am Rand des Ausschnitts **100** in der Wand **3** zu erkennen, die auch am Rand der Öffnungen des Rohrbodens **22** vorhanden ist. Diese besteht darin, dass der Rand des Ausschnitts **100** und der Rand der Öffnungen mit einem wenn auch geringen Durchzug **101** ausgebildet sind, der dazu beiträgt, dass selbst bei relativ geringer Wanddicke der Wand **3** eine einwandfreie Lötverbindung mit den Rohren **2** erreicht wird. Der Durchzug **101** zeigt zur Mitte des Wärmeübertragers hin. Der Durchzug **101** wird durch entsprechende Ausbildung des Stanzwerkzeugs für die Herstellung des Ausschnitts **100** realisiert, und er ist somit ohne Mehraufwand möglich. Diese Ausbildung des Ausschnitts **100** ist in allen Ausführungsbeispielen des Abgaswärmeübertagers vorhanden, auch wenn die anderen Abbildungen das nicht detailliert zeigen.
Wie die Fig. 3 zeigt, liegt zwischen den zwei Verbindungsebenen **30** und **40** ein Längenabschnitt **5** der Wärmeübertragerrohre **2.** Die Wärmeübertragerrohre **2** werden in Stapelrichtung **8** (Fig.4) zu einem Stapel von Wärmeübertragerrohren **2** zusammengesetzt. Die Verstärkungsplatten **75** werden hinzugefügt. Wie es weiter unten beschrieben ist, wird jeweils ein Inneneinsatz **15** in ein aus zwei identischen Flachrohrhälften **2a, 2b** bestehendes Wärmeübertragerrohr **2** eingelegt. Die Flachrohrhälften **2a, 2b** werden mittels umgebogener Laschen **53** am Randflansch **52** zusammengehalten. Der Stapel wird über den Längenbereich **5** der Wärmeübertragerrohre mit den Sammelkästen **1a** zusammengesetzt, wobei jeder Randflansch **52** eines jeden Wärmeübertragerrohres **2** in der Verbindungsebene **30** in einem dort vorhandenen Schlitz **70** zu liegen kommt und in der anderen Verbindungsebene **40** in einem dort vorhandenen Schlitz **70** des Rohrbodens **22** sitzt. (siehe oben)

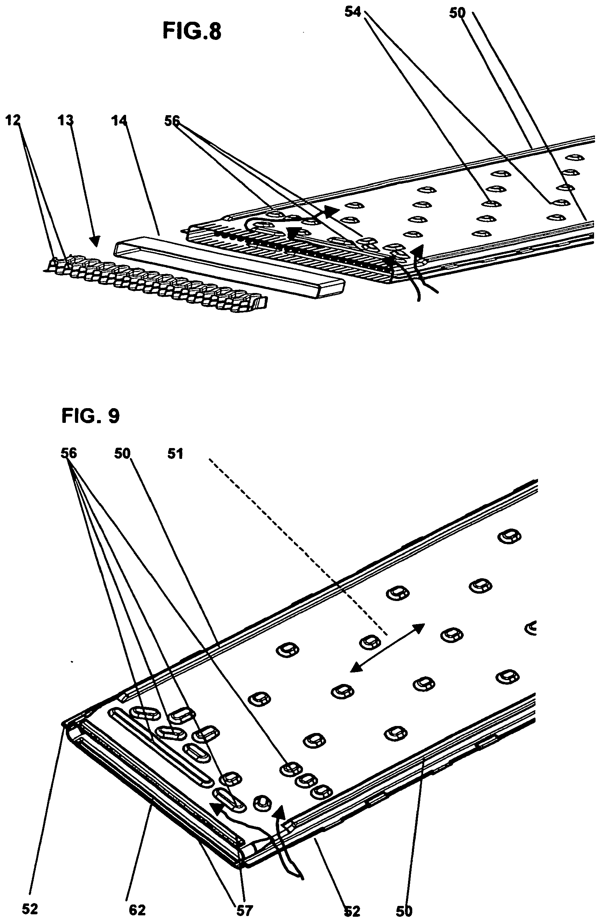

Die Fig. 4 zeigt die Situation an einem Ende **4** der Wärmeübertragerrohre **2** bzw. des Wärmeübertragers. Dort ist auch der Sammelkasten **1b** bereits hinzugefügt worden. Wie die Fig. 4 erkennen lässt, ist zwischen den Wärmeübertragerrohren **2** jeweils ein Strömungskanal **51** ausgebildet, durch den die Kühlflüssigkeit strömen kann. Zur Beschreibung der Ausbildung der Strömungskanäle **51** soll nochmals auf die Fig. 3 zurückgekommen werden. Dort ist zu sehen, dass die identischen Flachrohrhälften **2a, 2b** mit Ausformungen versehen sind. Von besonderer Bedeutung sind die beiden sich an den Längsrändern der identischen Flachrohrhälften **2a, 2b** erstreckenden Ausformungen **50,** die zwischen zwei zusammengefügten Wärmeübertragerrohren **2** einen Strömungskanal **51** abschließen. Auf den Breitseiten **55** der Wärmeübertragerrohre **2** befinden sich weitere Erhebungen **54.** In der Nähe der Verbindungsebene **30** ist eine Reihe mit Vorsprüngen **56** vorgesehen worden, die der Vergleichmäßigung der Strömung der Kühlflüssigkeit dient, die dort in der Nähe ein - bzw. austritt. (siehe Pfeile, Fig. 8)
Wie die Fig. 4 weiter deutlich zeigt, befinden sich in allen Wärmeübertragerrohren **2** gewellte Inneneinsätze **15.** Bei den Inneneinsätzen **15** des gezeigten Ausführungsbeispiels handelt es sich um solche, deren Wellenflanken **90** in Längsrichtung und in Querrichtung gewellt sind. Das ist in Fig. 4 durch den dort gezeigten teilweisen Längsschnitt, im Bild rechts, erkennbar. Weiterhin ist aus dieser Darstellung sehr gut zu sehen, dass die Wellenflanken **90** einen Einschnitt **10** aufweisen, der etwa in der Mitte der Höhe des Inneneinsatzes **15** bzw. in der Mitte zwischen den beiden Breitseiten **55** des jeweiligen Wärmeübertragerrohres **2** vorgesehen wurde. Damit werden die aufgrund von Temperaturwechseln auftretenden Längenänderungen in Stapelrichtung **8** der Wärmeübertragerrohre **2** zugelassen, bzw. kompensiert. Insbesondere die Deutlichkeit des damit erreichten Vorteils bezüglich der Widerstandsfähigkeit gegen Temperaturwechselbelastungen war überraschend. Alleine durch diese einfache Maßnahme war der Wärmeübertrager in der Lage, bisher mehr als 80 000 Temperaturwechselzyklen zu überstehen, was das Mehrfache dessen ist, was der Stand der Technik leisten kann. In der Fig. 4 wurde der Einschnitt **10** im Bereich der mittelbaren Verbindungsebene **40** vorgesehen. Dort sitzen die Enden **4** der Wärmeübertragerrohre **2** in Öffnungen des Rohrbodens **22,** der Stege **25** aufweist. Wie die Fig. 6 zeigt, können die Stege **25** im Querschnitt eine Kontur aufweisen, um die Flexibilität des Wärmeübertragers gegenüber Temperaturwechseln zu unterstützen.
Die Erfinder haben aufgezeigt, dass durch die Wahl der Tiefe des Einschnitts **10** sowie dessen Form und Position weitere Verbesserungen möglich sind, so dass ausreichend Raum für in diese Richtung gehende Optimierungsmaßnahmen vorhanden ist. Was die Tiefe des Einschnitts **10** betrifft, kann diese durchaus über den gesamten Längenabschnitt **5** zwischen den Verbindungsebenen **30** und **40** der Wärmeübertagerrohre **2** reichen, obwohl in der Fig. 4 lediglich ein relativ kurzer Einschnitt **10** gezeigt ist. Beispielsweise wurde, wie die bereits erwähnte Fig. 6 zeigt, mit einem V - förmigen Einschnitt **10** eine vorteilhafte Weiterbildung geschaffen. Darüber hinaus wurde untersucht und festgestellt, dass es von Vorteil ist, die Geometrie des V - förmigen Einschnitts **10** nicht über die gesamte Breite des Inneneinsatzes **15** gleichmäßig auszuführen, sondern das "V" zum Zentrum hin zu verkleinern. (nicht dargestellt) Die Fig. 5 zeigt einen Wärmeübertrager mit einem Inneneinsatz **15,** der einen V - förmigen Einschnitt **10** aufweist, dessen Geometrie allerdings über die gesamte Breite des Inneneinsatzes **15** konstant ist. Ansonsten stimmt diese Figur mit der bereits beschriebenen Fig. 4 überein.
Ferner wurden gute Ergebnisse mit Inneneinsätzen **15** erzielt, deren Wellenflanken **90** zwischen einem Wellenberg und einem Wellental, bzw. in Richtung zwischen den Breitseiten **55** des Wärmeübertragerrohres **2,** gewellt ausgebildet sind. Mit dieser Maßnahme konnte die Flexibilität in Stapelrichtung **8** ebenfalls unterstützt werden.

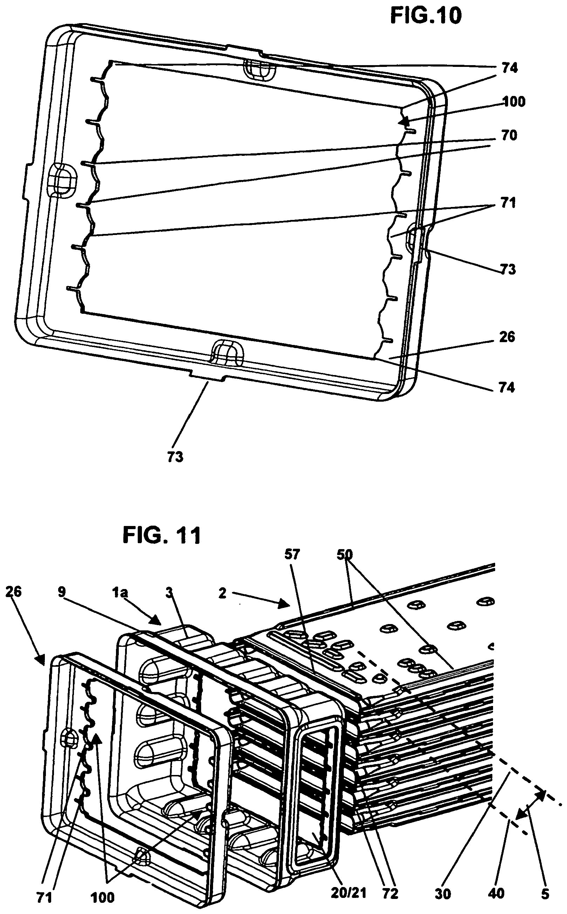

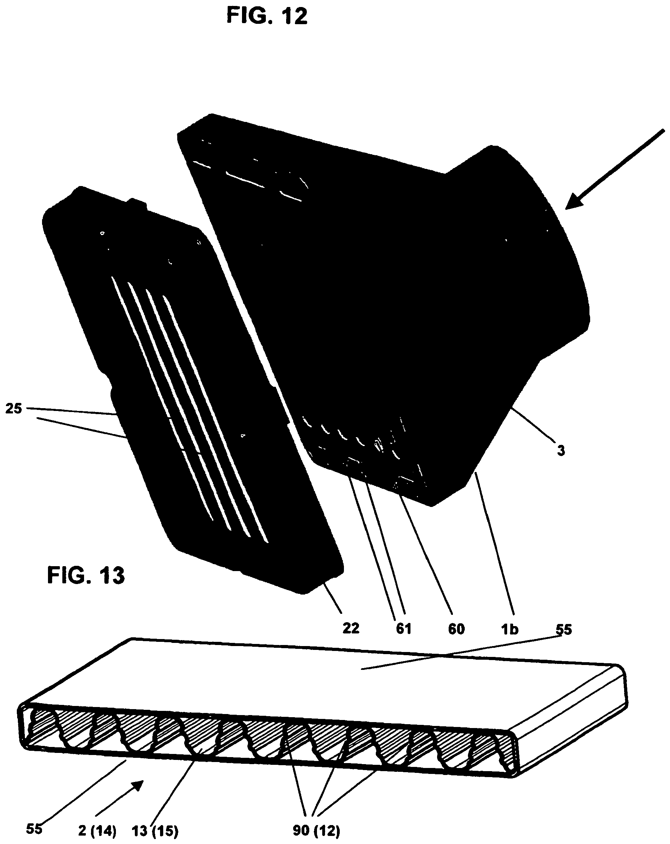

Da die Belastungen durch Temperaturwechsel bei einem Abgaswärmeübertrager wegen der Höhe der Temperaturunterschiede und der Häufigkeit der Temperaturwechsel bis in Grenzbereiche gehen, die mit den üblichen Werkstoffen (Edelstahl, Aluminium) und Verbindungstechniken - jedenfalls unter Berücksichtigung kostengünstiger Fertigungsverfahren der Massenproduktion - gerade noch realisierbar sind, haben sich die Erfinder mit zusätzlichen weiterbildenden Maßnahmen beschäftigt, und sie konnten deren Vorteilhaftigkeit im Versuch nachweisen. Zur Beschreibung einer solchen Maßnahme wird auf die Fig. 7 und 8 Bezug genommen. In der Fig. 7 wurden nur jene Bezugszeichen eingetragen, die den wesentlichen Unterschied zur Fig. 4 ausmachen, die zur Genüge vorne beschrieben wurde. Der Einschnitt **10** in den Inneneinsätzen **15** wurde in Fig. 7 aus der Verbindungsebene **40** in Fig. 4 in die andere Verbindungsebene **30** verlegt. In die Enden **4** der Wärmetauscherrohre **2** wurden Rohrstücke **14** eingesetzt, die ihrerseits ebenfalls einen Einsatz **13** aufweisen. Die Rohrstücke **14** erstrecken sich über den Längenabschnitt **5** der Wärmeübertragerrohre **2.** In Fig. 8 besitzen die Einsätze **13** in den Stegen **12** ebenfalls einen Einschnitt **10.** Es ist jedoch aus der Sicht der Fertigungstechnik von Vorteil, wenn auf diesen Einschnitt **10** verzichtet wird und dafür der Einsatz **13** derart gestaltet wird, dass er in anderer Weise Längenänderungen in Stapelrichtung **8** der Wärmeübertragerrohre **2** kompensieren kann, beispielsweise mit in Richtung zwischen den Breitseiten **55** gewellten Wellenflanken **90,** wie vorne beschrieben. (siehe auch Fig. 13 - 16)
Bezug nehmend auf die Fig. 8 soll auf einen weiteren Unterschied eingegangen werden. Dieser besteht darin, dass die Vorsprünge **56** an den Flachrohrhälften **2a, 2b** verändert wurden. Im Bereich der Verbindungsebene **40** wurden Scharen von Vorsprüngen **56** konzentriert, die die eintretende Kühlflüssigkeit so lenken, dass ein wesentlicher Teil davon zunächst auf die Verbindungsebene **40** gelenkt wird, bevor diese in den Strömungskanälen **51** weiter strömen kann. Damit soll ein besserer Temperaturausgleich erreicht werden und somit soll ebenfalls dem Ziel gedient werden, die Temperaturwechselbelastungsfähigkeit zu verbessern.
Es ist in einer alternativen Gestaltung daran gedacht worden, den Rohrboden **22** durch einen Zwischenboden **26** zu ersetzen. In der Fig. 9 wird dargestellt, dass dazu die Flachrohrhälften **2a, 2b** modifiziert werden müssen. Kurz gesagt, wurden deswegen quer über die Breitseiten **55** der Enden 4 der Flachrohrhälften **2a, 2b** reichende weitere Ausformungen **57** angebracht, deren Höhe mit der Höhe der entlang der Längsseiten laufenden Ausprägungen **50** übereinstimmt. Die weiteren Ausformungen **57** benachbarter Wärmeübertragerrohre **2** liegen aneinander an und schließen jeweils einen Strömungskanal **51** ab. Deshalb kann auf einen traditionellen Rohrboden **22** mit Stegen **25** verzichtet werden. Dieser wird durch den Zwischenboden **26** ersetzt, der in den Fig. 10 und 11 gezeigt ist. Wie die genannten Figuren zeigen, ist der Zwischenboden **26 -** in ähnlicher Weise wie die Wand **3** in der anderen Verbindungsebene - mit Schlitzen **70** und Vorsprüngen **71** ausgestattet, um der Umfangskontur des Stapels der Wärmeübertragerrohe **2** zu entsprechen. Die Verbindung des Zwischenbodens **26** mit der Wand **3** erfolgt über eine Abstufung **9** der Wand **3,** die einen Anschlag und einen Sitz für den Zwischenoden **26** bietet, ähnlich wie bei dem Rohrboden **22,** der im Zusammenhang mit der Fig. 4 beschrieben wurde. Die Umfangskontur im Zwischenboden **26** weist auch Absätze **74** zur Aufnahme der Verstärkungsplatten **75** auf. Durch das Vorsehen eines Zwischenbodens **26** wird eine zusätzliche Gewichts - und Kostenreduzierung erreicht. In der Fig. 11 wurde mit dem Bezugszeichen **72** angedeutet, was unter den Furchen **72** zu verstehen ist, in die jeweils einer der Vorsprünge 71 hinein ragt.
Die Fig. 12 zeigt eine andere Maßnahme, die dazu beiträgt, die Temperaturwechselbelastungsfähigkeit des Wärmeübertragers zu verbessern. Im Sammelkasten **1b** wurde ein Hitzeschutzschild **60** eingefügt, der an vier Punkten metallisch mit dem Sammelkasten **1b** verbunden ist. Der Schild **60** besitzt Schlitze **61.** Die Schlitze **61** sind im Querschnitt geringfügig kleiner als der Querschnitt **62** eines jeden Wärmeübertragerrohres **2,** die in diesem Ausführungsbeispiel in Öffnungen des Rohrbodens **22,** mit Stegen **25,** stecken. Der Schild **60** ist in einem optimierten Abstand von den Öffnungen der Wärmeübertragerrohre **2** angeordnet. Es konnte festgestellt werden, dass mit dieser Maßnahme die Temperaturunterschiede im Bereich der Verbindungsebene **30** oder **40** reduziert werden können.

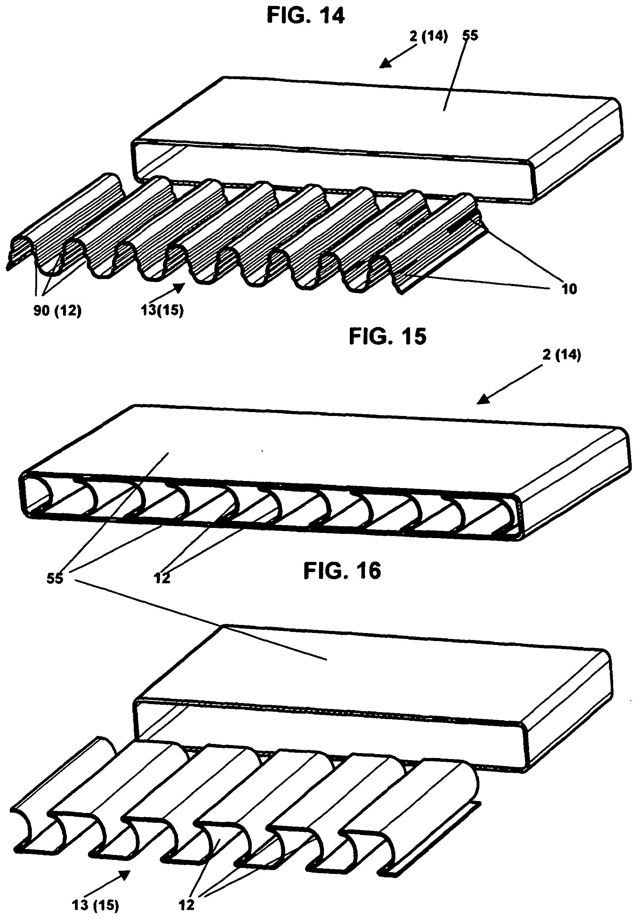

Die Fig. 13 und 14 zeigen ein Wärmeübertragerrohr **2** mit einem Inneneinsatz **15** oder mit meinem Einsatz **13,** wie er bei den Rohrstücken **14** vorhanden ist, die im Zusammenhang mit dem Ausführungsbeispiel aus der Fig. 7 beschrieben wurden. Die Wellenflanken **90** bzw. die Stege **12** des Inneneinsatzes **13** bzw. **15** sind in Richtung zwischen den Breitseiten **55** gewellt ausgebildet, wodurch in der erwähnten Richtung durch Temperaturänderungen verursachte Längenänderungen zu kompensieren sind.
In der Fig. 14 wurde angedeutet, dass es vorteilhaft ist, den Inneneinsatz **15** oder den Einsatz **13** an beiden Enden mit einem Einschnitt **10** zu versehen. Der Einschnitt **10** wurde nur in zwei Wellenflanke **90** eingezeichnet, wobei sich versteht, dass er in sämtlichen Wellenflanken **90** vorgesehen ist. Somit werden Montagefehler ausgeschlossen, die sich ansonsten durch "falsch" eingefügte Inneneinsätze **15, 13** einstellen könnten.

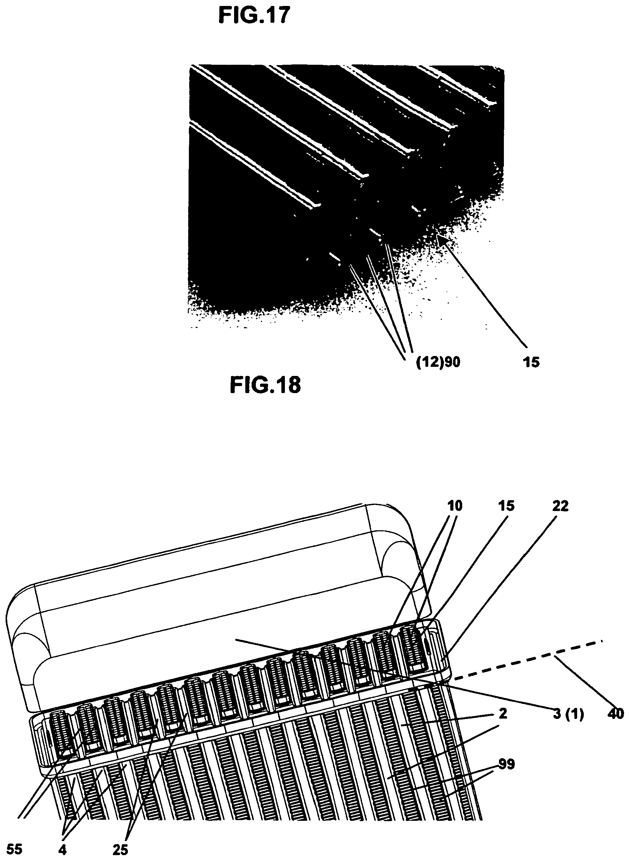

Die Figuren 15 und 16 zeigen einen weiter modifizierten Inneneinsatz **15** bzw. einen Einsatz **13.** Dort besitzen die zwischen den Breitseiten **55** des Wärmeübertragerrohres **2** verlaufenden Stege **12** eine gebogene Kontur, wodurch sie ebenfalls in Richtung zwischen den Breitseiten **55** nachgiebig sind. Solche aus einem Blechband geformten und geschweißten Wärmeübertragerrohre **2** können im gesamten Wärmeübertrager vorgesehen werden, wie er beispielsweise in der Fig. 18 gezeigt ist. Da sie in beliebigen Längen herstellbar sind, eignen sie sich jedoch auch zur Herstellung der Rohrstücke **14,** die dann lediglich von einem endlosen" Wärmeübertragerrohr **2** auf Länge geschnitten werden müssen - natürlich nachdem vorher der Einsatz **13** in das Wärmeübertragerrohr **2** eingefügt wurde.
Die Fig. 18 zeigt die Anwendung flacher Wärmeübertragerrohre **2** im Zusammenhang mit einem luftgekühlten Ladeluftkühler. Der Ladeluftkühler hat einen Sammelkasten **1** mit einer Wand **3.** Die Enden **4** der Wärmeübertragerrohre **2** stecken in Öffnungen eines Rohrbodens **22,** und sie sind dort beispielsweise eingelötet worden. Der Rohrboden **22** stellt eine Verbindungsebene **40** dar. Die Art der in diesem Beispiel vorgesehenen mittelbaren Verbindung zwischen der Wand **3** und dem Wärmeübertragerrohr **2** über einen zwischengeschalteten Rohrboden **22** ist ohne Belang. Die manchmal extrem heiße Ladeluft strömt durch die Wärmeübertragerrohre **2** und zwischen den Rohren **2** befinden sich Wellrippen **99,** durch die Kühlluft hindurch strömt. Die Stege **25** zwischen den Öffnungen im Rohrboden **22** sind im Querschnitt mit einer Kontur versehen, wie es aus der Fig. 6 zu sehen ist, um das flexible Verhalten unter Temperaturwechselbelastungen zu unterstützen. In den Rohren **2** befindet sich ein Inneneinsatz **15.** Der Inneneinsatz **15** weist einen Einschnitt **10** auf, der wenigstens ein Stück weit in den Inneneinsatz **15** hineingeht, und der parallel zu den Breitseiten **55** des Wärmeübertragerrohres **2** verläuft. Die Anwendung der beschriebenen Merkmale führt dazu, dass Brüche in der Verbindung Wärmeübertragerrohr / Rohrboden zumindest seltener vorkommen.
Die Einzelteile der Wärmeübertrager sind bekanntlich bedarfsweise mit einer Lotschicht überzogen, so dass sie im Lötofen metallisch verbunden werden können.

Schließlich zeigt die Fig. 17 eine den Fig. 13 und 14 ähnliche Ausführung. Es ist ein Teil eines Inneneinsatzes **15** zu sehen, dessen Wellenflanken **90** an einem Ende lediglich ein Stück weit gewellt ausgebildet sind. Die Wellung der Wellenflanken **90** bzw. der Stege **12** ist in Richtung zwischen den Breitseiten **55** des Wärmeübetragerrohres **2** vorgesehen und sie liegt im Bereich einer oder beider Verbindungsebenen **30, 40.**
Die beschriebenen unterschiedlichen Maßnahmen, die zu einer Kompensation von durch Temperaturwechsel verursachten Längenänderung in Stapelrichtung **8** der Wärmeübertragerrohre **2** bzw. quer zu deren Breitseiten **55** beitragen, können selbstverständlich je nach Bedarf auch kombiniert werden.

## Patentansprüche

1. Wärmeübertrager mit einem Einlasssammelkasten (1), um das heiße Medium in flache Wärmeübertragerrohre (2) zu verteilen, bzw. mit einem Auslasssammelkasten, um dasselbe Medium aus den flachen Wärmeübertragerrohren (2) aufzunehmen und weiterzuleiten, wobei der Sammelkasten (1) eine einen Ausschnitt (100) aufweisende Wand (3) besitzt, die sich um den gesamten Umfang des Endes (4) eines Stapels der Wärmeübertragerrohre (2) und über einen gewissen, von zwei Verbindungsebenen (30, 40) begrenzten, Längenabschnitt (5) derselben erstreckt, wobei die Wand (3) wenigstens einen Einlass (20) und / oder einen Auslass (21) für das Kühlmedium, welches zwischen den Wärmeübertragerrohren (2) strömt, besitzt, und wobei in den flachen Wärmeübertragerrohren (2) auf der Heißseite ein Inneneinsatz (15) angeordnet ist, der mit den beiden Breitseiten (55) des Wärmeübertragerrohres (2) metallisch verbunden ist,
**dadurch gekennzeichnet, dass**
der Inneneinsatz (15, 13, 14) im Bereich der unmittelbaren oder mittelbaren Verbindung in den zwei Verbindungsebenen (30, 40) des Stapels der Wärmeübertragerrohre (2) mit der Wand (3) des Sammelkastens (1), durch Temperaturwechsel verursachte Längenänderungen entlang der Stapelrichtung (8) der Wärmeübertragerrohre (2) bzw. in Richtung zwischen den Breitseiten (55) derselben, kompensiert,
und dass die Umfangskontur des Ausschnitts (100) Schlitze (70) und Vorsprünge (71) aufweist, um der Umfangskontur des Stapels zu entsprechen.

2. Wärmeübertrager nach Anspruch 1, **dadurch gekennzeichnet, dass** der Inneneinsatz (15) wenigstens einen vorzugsweise etwa quer zur Stapelrichtung (8) verlaufenden Einschnitt (10) aufweist, wobei der Inneneinsatz (15) vorzugsweise ein in Längs - und Querrichtung gewelltes Blech ist und der Schnitt (10) die Wellenflanken (90) wenigstens ein Stück weit auftrennt.

3. Wärmeübertrager nach Anspruch 1 oder 2, **dadurch gekennzeichnet, dass** der Einschnitt (10) beispielsweise ein V - förmiger Ausschnitt ist, der sich zum naheliegenden Ende (4) des Stapels der Wärmeübertragerrohre (2) hin öffnet, wobei die Geometrie des Ausschnitts unterschiedlich sein kann, beispielsweise vom Zentrum zum Rand des Inneneinsatzes (15, 13) hin größer werdend.

4. Wärmeübertrager nach Anspruch 1, **dadurch gekennzeichnet, dass** die Wellenflanken (90) des Inneneinsatzes (15, 13) in Stapelrichtung (8) nachgiebig, beispielsweise ebenfalls gewellt, ausgebildet sind.

5. Wärmeübertager nach einem der vorstehenden Ansprüche, **dadurch gekennzeichnet, dass** der Einschnitt (10) an beiden Enden des Inneneinsatzes (15) vorhanden ist.

6. Wärmeübertrager nach Anspruch 1, **dadurch gekennzeichnet, dass** die Wärmeübertragerrohre (2) vorzugsweise durch jeweils zwei und besonders bevorzugt durch zwei identische Flachrohrhälften (2a, 2b) gebildet sind, die an ihren Randflanschen (52) verbunden sind.

7. Wärmeübertrager nach einem der vorstehenden Ansprüche, **dadurch gekennzeichnet, dass** die Wärmeübertragerrohre (2) nach außen weisende Ausprägungen (50) aufweisen, die in dem Stapel aus Wärmeübertragerrohren (2) für einen Abstand zwischen den Wärmeübertragerrohren (2) sorgen, wobei in jedem Abstand jeweils ein Strömungskanal (51) für das andere Medium gebildet ist.

8. Wärmeübertrager nach Anspruch 1, **dadurch gekennzeichnet, dass** in den Enden (4) der Wärmeübertragerrohre (2) passende Rohrstücke (14) eingesetzt sind, die die Wärmeübertragerrohre (2) verstärken und die einen Einsatz (13) aufweisen.

9. Wärmeübertrager nach Anspruch 8, **dadurch gekennzeichnet, dass** die Einsätze (13) der Rohrstücke (14) in Stapelrichtung (8) verlaufende Stege (12) besitzen, die eine Kontur, beispielsweise ein bogenförmige oder zickzack - förmige Kontur, aufweisen, um Längenänderungen in Stapelrichtung (8) der Wärmeübertragerrohre (2) zu gestatten.

10. Wärmeübertrager nach den Ansprüchen 8 oder 9, **dadurch gekennzeichnet, dass** die Rohrstücke (14) aus gezogenen oder geschweißten Flachrohren mit dem entsprechenden Einsatz (13), der die Stege (12) repräsentiert, herstellbar sind, die auf entsprechende Länge zugeschnitten werden.

11. Wärmeübertrager, insbesondere nach den Ansprüchen 8 - 10, **dadurch gekennzeichnet, dass** sich die Rohrstücke (14) entweder etwa über den Längenabschnitt (5) der Wärmeübertragerrohre (2) erstrecken, der von der Wand (3) umfasst ist, oder dass die Rohrstücke (14) mit ihren Einsätzen (13) in lediglich einer Verbindungsebene (40) zwischen der Wand (3) und den Wärmeübertragerrohren (2) angeordnet sind, wobei sich die Rohrstücke (14) an den Inneneinsatz (15) anschließen.

12. Wärmeübertrager nach Anspruch 1, **dadurch gekennzeichnet, dass** die Wand (3) des Sammelkastens (1) Verformungen (17) aufweist, die einerseits ein Beitrag zur Stabilität sind und andererseits eine gewisse Elastizität bei Temperaturwechselbelastungen gestatten.

13. Wärmeübertrager nach Anspruch 1, **dadurch gekennzeichnet, dass** im Einlasssammelkasten (1) ein Hitzeschutzschild (60) in der Art eines geschlitzten Bleches (61) in optimiertem Abstand vor dem Eintritt des Mediums in die Wärmeübertragerrohre (2) angeordnet und mit der Wand (3) verbunden ist.

14. Wärmeübertrager nach Anspruch 13, **dadurch gekennzeichnet, dass** jeder Schlitz (61) im Hitzeschutzschild (60) jeweils einer Öffnung (62) des Wärmeübertragerrohres (2) zugeordnet ist und geringfügig kleiner ausgebildet ist als die Öffnung (62) des Wärmeübertragerrohres (2).

15. Wärmeübertrager nach Anspruch 1, **dadurch gekennzeichnet, dass** in der ersten Verbindungsebene (40) ein Rohrboden (22) mit Stegen (25) zur Aufnahme der Enden des Stapels der Wärmeübertragerrohre (2) vorgesehen, der mit der Wand (3) des Sammelkastens (1) verbunden ist.

16. Wärmeübertrager nach Anspruch 1, **dadurch gekennzeichnet, dass** in der ersten Verbindungsebene (40) ein die Umfangskontur des Stapels der Wärmeübertragerrohre (2) aufweisender Zwischenboden (26) angeordnet ist, der mit der Wand (3) verbunden ist.

17. Wärmeübertrager nach den vorstehenden Ansprüchen, **dadurch gekennzeichnet, dass** die Schlitze (70) des Ausschnitts (100) zur Aufnahme der Randflansche (52) der Wärmeübertragerrohre (2) und die Vorsprünge (71) zum Verschluss der zwischen zwei Wärmeübertragerrohren (2) ausgebildeten Furchen (72) vorgesehen sind..

18. Wärmeübertrager nach den vorstehenden Ansprüchen, **dadurch gekennzeichnet, dass** die Breitseiten (55) der Wärmeübertragerrohre (2) im Bereich der ersten Verbindungsebene (40) mit weiteren Ausformungen (56, 57) versehen sind, wobei benachbarte Wärmeübertragerrohre (2) mit den weiteren Ausformungen (57 oder 56) aneinander anliegen und wobei die Höhe der weiteren Ausformungen (57) und die Höhe der Ausprägung (50) übereinstimmen, um die Strömungskanäle (51) zwischen den Wärmeübertragerrohren (2) zur Verfügung zu stellen.

19. Wärmeübertrager nach Anspruch 18, **dadurch gekennzeichnet, dass** die weiteren Ausprägungen (57) im Bereich des Eintritts bzw. Austritt der Strömungskanäle (51) angeordnet sind und die Strömung aufteilen, so dass ein Teil der Strömung bspw. auf den Rohrboden (22) gerichtet ist, um diesen zu kühlen.

20. Wärmeübertrager nach den Ansprüchen 18 und 19, **dadurch gekennzeichnet, dass** die Ausprägungen (56) in Scharen konzentriert angeordnet sind und zweckmäßige Formen aufweisen.

21. Wärmeübertrager nach einem der vorstehenden Ansprüche, **dadurch gekennzeichnet, dass** der Sammelkasten (1) vorzugsweise mehrteilig ausgebildet ist, wobei er einen Einlass - oder Auslasssammelkasten (1b) für das eine Medium aufweist, der bevorzugt nach Art eines Diffusors ausgebildet ist und einen Einlass - oder Auslasssammelkasten (1a) für das andere Medium besitzt, der sich über einen gewissen Längenabschnitt (5) des Endes (4) des Stapels der Wärmeübertragerrohre (2) erstreckt.

22. Wärmeübertrager nach einem der vorstehenden Ansprüche, **dadurch gekennzeichnet, dass** der Wärmeübertrager als mittels Flüssigkeit gekühlter Abgaswärmeübertrager in Abgasrückführungsanlagen von Kraftfahrzeugen oder als Ladeluftkühler verwendet wird.

## Claims

1. Heat exchanger having an inlet manifold box (1) for distributing the hot medium into flat heat exchanger tubes (2), and having an outlet manifold box for receiving the same medium from the flat heat exchanger tubes (2) and conducting said medium onward, wherein the manifold box (1) has a wall (3) which has a cutout (100) and which extends around the entire circumference of the end (4) of a stack of heat exchanger tubes (2) and over a certain length section (5) thereof, said length section being delimited by two connection planes (30, 40), wherein the wall (3) has at least one inlet (20) and/or one outlet (21) for the cooling medium which flows between the heat exchanger tubes (2), and wherein, in the flat heat exchanger tubes (2), on the hot side, there is arranged an internal insert (15) which is metallically connected to the two wide sides (55) of the heat exchanger tube (2), **characterized in that**
the internal insert (15, 13, 14), in the region of the direct or indirect connection, in the two connection planes (30, 40) of the stack of heat exchanger tubes (2), to the wall (3) of the manifold box (1), compensates temperature-change-induced changes in length along the stack direction (8) of the heat exchanger tubes (2) or in a direction between the wide sides (55) thereof,
and **in that** the circumferential contour of the cutout (100) has slots (70) and projections (71) for corresponding to the circumferential contour of the stack.

2. Heat exchanger according to Claim 1, **characterized in that** the internal insert (15) has at least one incision (10) running preferably approximately transversely with respect to the stack direction (8), wherein the internal insert (15) is preferably a metal sheet which is corrugated in the longitudinal and transverse directions, and the incision (10) severs the correlation flanks (90) at least to a certain extent.

3. Heat exchanger according to Claim 1 or 2, **characterized in that** the incision (10) is for example a V-shaped cutout which opens toward the closest end (4) of the stack of heat exchanger tubes (2), wherein the geometry of the cutout may differ, for example may widen from the centre towards the edge of the internal insert (15, 13).

4. Heat exchanger according to Claim 1, **characterized in that** the correlation flanks (90) of the internal insert (15, 13) are of flexible form, for example likewise of corrugated form, in the stack direction (8).

5. Heat exchanger according to one of the preceding claims, **characterized in that** the incision (10) is provided at both ends of the internal insert (15).

6. Heat exchanger according to Claim 1, **characterized in that** the heat exchanger tubes (2) are preferably formed by in each case two, particularly preferably two identical, flat tube halves (2a, 2b) which are connected at their edge flanges (52).

7. Heat exchanger according to one of the preceding claims, **characterized in that** the heat exchanger tubes (2) have outwardly pointing protuberances (50) which, in the stack of heat exchanger tubes (2), give rise to a spacing between the heat exchanger tubes (2), wherein in each case one flow duct (51) for the other medium is formed in each spacing.

8. Heat exchanger according to Claim 1, **characterized in that**, into the ends (4) of the heat exchanger tubes (2), there are inserted fitting tube pieces (14) which reinforce the heat exchanger tubes (2) and which have an insert (13).

9. Heat exchanger according to Claim 8, **characterized in that** the inserts (13) of the tube pieces (14) have webs (12) which run in the stack direction (8) and which have a contour, for example an arcuate or a zigzag-shaped contour, for permitting changes in length in the stack direction (8) of the heat exchanger tubes (2).

10. Heat exchanger according to Claims 8 or 9, **characterized in that** the tube pieces (14) can be produced from drawn or welded flat tubes with the corresponding insert (13) which represents the webs (12), which are cut to a corresponding length.

11. Heat exchanger, in particular according to Claims 8 to 10, characterized either in that the tube pieces (14) extend approximately over that length section (5) of the heat exchanger tubes (2) which is encompassed by the wall (3), or in that the tube pieces (14) are arranged with their inserts (13) in only a connection plane (40) between the wall (3) and the heat exchanger tubes (2), wherein the tube pieces (14) adjoin the internal insert (15).

12. Heat exchanger according to Claim 1, **characterized in that** the wall (3) of the manifold box (1) has deformations (17) which firstly contribute to stability and secondly permit a certain elasticity in the presence of fluctuating temperature loads.

13. Heat exchanger according to Claim 1, **characterized in that** a heat protection shield (60) in the form of a slotted metal sheet (61) is arranged in the inlet manifold box (1) at an optimized distance upstream of the inlet of the medium into the heat exchanger tubes (2) and is connected to the wall (3).

14. Heat exchanger according to Claim 13, **characterized in that** each slot (61) in the heat protection shield (60) is assigned to in each case one opening (62) of the heat exchanger tube (2) and is formed so as to be slightly smaller than the opening (62) of the heat exchanger tube (2).

15. Heat exchanger according to Claim 1, **characterized in that**, in the first connection plane (40), there is provided a tube plate (22) with webs (25) for receiving the ends of the stack of heat exchanger tubes (2), which tube plate is connected to the wall (3) of the manifold box (1).

16. Heat exchanger according to Claim 1, **characterized in that**, in the first connection plane (40), there is arranged an intermediate plate (26) which has the circumferential contour of the stack of heat exchanger tubes (2) and which is connected to the wall (3).

17. Heat exchanger according to the preceding claims, **characterized in that** the slots (70) of the cutout (100) are provided for receiving the edge flanges (52) of the heat exchanger tubes (2), and the projections (71) are provided for closing off the grooves (72) formed between two heat exchanger tubes (2).

18. Heat exchanger according to the preceding claims, **characterized in that** the wide sides (55) of the heat exchanger tubes (2) are equipped, in the region of the first connection plane (40), with further projecting formations (56, 57), wherein adjacent heat exchanger tubes (2) bear against one another by way of the further projecting formations (57 or 56), and wherein the height of the further projecting formations (57) and the height of the protuberance (50) correspond, in order to thereby provide the flow ducts (51) between the heat exchanger tubes (2).

19. Heat exchanger according to Claim 18, **characterized in that** the further protuberances (57) are arranged in the region of the inlet and/or outlet of the flow ducts (51) and divide up the flow such that a part of the flow is directed for example onto the tube plate (22) in order to cool the latter.

20. Heat exchanger according to Claims 18 and 19, **characterized in that** the protuberances (56) are arranged so as to be concentrated in groups and have expedient shapes.

21. Heat exchanger according to one of the preceding claims, **characterized in that** the manifold box (1) is preferably of multi-part form, wherein said manifold box has an inlet or outlet manifold box (1b) for one medium, said inlet or outlet manifold box preferably being formed in the manner of a diffuser, and an inlet or outlet manifold box (1a) for the other medium, which inlet or outlet manifold box extends over a certain length section (5) of the end (4) of the stack of heat exchanger tubes (2).

22. Heat exchanger according to one of the preceding claims, **characterized in that** the heat exchanger is used as a liquid-cooled exhaust gas heat exchanger in exhaust-gas recirculation systems of motor vehicles, or as a charge-air cooler.

## Revendications

1. Échangeur de chaleur comprenant un caisson collecteur d'entrée (1) pour distribuer le fluide chaud dans des tuyaux d'échangeur de chaleur plats (2), et comprenant un caisson collecteur de sortie pour recevoir et transférer ledit fluide hors des tuyaux d'échangeur de chaleur plats (2), le caisson collecteur (1) possédant une paroi (3) présentant une découpe (100), qui s'étend sur toute la périphérie de l'extrémité (4) d'une pile des tuyaux d'échangeur de chaleur (2) et sur une certaine section longitudinale (5) de ceux-ci limitée par deux plans de raccordement (30, 40), la paroi (3) possédant au moins une entrée (20) et/ou une sortie (21) pour le fluide de refroidissement qui s'écoule entre les tuyaux d'échangeur de chaleur (2), et un insert intérieur (15) étant disposé dans les tuyaux d'échangeur de chaleur plats (2) du côté chaud, lequel est raccordé métalliquement aux deux côtés larges (55) du tuyau d'échangeur de chaleur (2),
**caractérisé en ce que**
l'insert intérieur (15, 13, 14), dans la région de raccordement direct ou indirect dans les deux plans de raccordement (30, 40) de la pile des tuyaux d'échangeur de chaleur (2) à la paroi (3) du caisson collecteur (1), compense les variations de longueur provoquées par un changement de température le long de la direction de la pile (8) des tuyaux d'échangeur de chaleur (2) ou dans la direction entre les côtés larges (55) de ceux-ci, et **en ce que** le contour périphérique de la découpe (100) présente des fentes (70) et des saillies (71) destinées à correspondre au contour périphérique de la pile.

2. Échangeur de chaleur selon la revendication 1, **caractérisé en ce que** l'insert intérieur (15) présente au moins une entaille (10) s'étendant de préférence approximativement transversalement à la direction de la pile (8), l'insert intérieur (15) étant de préférence une tôle ondulée dans la direction longitudinale et transversale et la coupure (10) séparant au moins sur une certaine distance les flancs d'ondulation (90).

3. Échangeur de chaleur selon la revendication 1 ou 2, **caractérisé en ce que** l'entaille (10) est de préférence une découpe en forme de V qui s'ouvre vers l'extrémité proche (4) de la pile des tuyaux d'échangeur de chaleur (2), la géométrie de la découpe pouvant être différente, par exemple pouvant augmenter depuis le centre vers le bord de l'insert intérieur (15, 13).

4. Échangeur de chaleur selon la revendication 1, **caractérisé en ce que** les flancs d'ondulation (90) de l'insert intérieur (15, 13) sont réalisés de manière flexible dans la direction de la pile (8), par exemple sous forme également ondulée.

5. Échangeur de chaleur selon l'une quelconque des revendications précédentes, **caractérisé en ce que** l'entaille (10) est prévue au niveau des deux extrémités de l'insert intérieur (15).

6. Échangeur de chaleur selon la revendication 1, **caractérisé en ce que** les tuyaux d'échangeur de chaleur (2) sont formés préférablement à chaque fois par deux moitiés de tuyaux plats (2a, 2b) préférablement par deux moitiés de tuyaux plats identiques qui sont raccordées au niveau de leurs flancs de bord (52).

7. Échangeur de chaleur selon l'une quelconque des revendications précédentes, **caractérisé en ce que** les tuyaux d'échangeur de chaleur (2) présentent des reliefs (50) orientés vers l'extérieur, qui fournissent un espacement entre les tuyaux d'échangeur de chaleur (2) dans la pile de tuyaux d'échangeur de chaleur (2), un canal d'écoulement (51) pour l'autre fluide étant formé dans chaque espacement.

8. Échangeur de chaleur selon la revendication 1, **caractérisé en ce que** l'on utilise des pièces de tuyau (14) s'adaptant dans les extrémités (4) des tuyaux d'échangeur de chaleur (2), lesquelles renforcent les tuyaux d'échangeur de chaleur (2) et présentent un insert (13).

9. Échangeur de chaleur selon la revendication 8, **caractérisé en ce que** les inserts (13) des pièces de tuyau (14) possèdent des nervures (12) s'étendant dans la direction de la pile (8), lesquelles présentent un contour, par exemple un contour en forme d'arc ou en forme de zigzag afin de permettre des variations de longueur dans la direction de la pile (8) des tuyaux d'échangeur de chaleur (2).

10. Échangeur de chaleur selon les revendications 8 ou 9, **caractérisé en ce que** les pièces de tuyau (14) peuvent être fabriquées à partir de tuyaux plats emboutis ou soudés avec l'insert correspondant (13), qui représente les nervures (12), qui sont découpés à la longueur correspondante.

11. Échangeur de chaleur, en particulier selon les revendications 8 à 10, **caractérisé en ce que** les pièces de tuyau (14) s'étendent soit approximativement sur la portion longitudinale (5) des tuyaux d'échangeur de chaleur (2) qui est comprise par la paroi (3), soit **en ce que** les pièces de tuyau (14) sont disposées avec leurs inserts (13) dans seulement un plan de raccordement (40) entre la paroi (3) et les tuyaux d'échangeur de chaleur (2), les pièces de tuyau (14) se raccordant à l'insert intérieur (15).

12. Échangeur de chaleur selon la revendication 1, **caractérisé en ce que** la paroi (3) du caisson collecteur (1) présente des déformations (17) qui contribuent d'une part à la stabilité et qui permettent d'autre part une certaine élasticité lors des sollicitations de changement de température.

13. Échangeur de chaleur selon la revendication 1, **caractérisé en ce que** dans le caisson collecteur d'entrée (1) est disposé un bouclier thermique (60) à la manière d'une tôle fendue (61) à une distance optimale avant l'entrée du fluide dans les tuyaux d'échangeur de chaleur (2), lequel est raccordé à la paroi (3).

14. Échangeur de chaleur selon la revendication 13, **caractérisé en ce que** chaque fente (61) dans le bouclier thermique (60) est associée à une ouverture respective (62) du tuyau d'échangeur de chaleur (2) et est réalisée de manière légèrement plus petite que l'ouverture (62) du tuyau d'échangeur de chaleur (2).

15. Échangeur de chaleur selon la revendication 1, **caractérisé en ce que** dans le premier plan de raccordement (40) est prévu un fond de tuyau (22) avec des nervures (25) pour recevoir les extrémités de la pile des tuyaux d'échangeur de chaleur (2), lequel est raccordé à la paroi (3) du caisson collecteur (1).

16. Échangeur de chaleur selon la revendication 1, **caractérisé en ce qu'**un fond intermédiaire (26) présentant le contour périphérique de la pile des tuyaux d'échangeur de chaleur (2) est disposé dans le premier plan de raccordement (40), lequel fond intermédiaire est raccordé à la paroi (3).

17. Échangeur de chaleur selon les revendications précédentes, **caractérisé en ce que** les fentes (70) de la découpe (100) sont prévues pour recevoir les brides de bord (52) des tuyaux d'échangeur de chaleur (2) et les saillies (71) sont prévues pour fermer les rainures (72) réalisées entre deux tuyaux d'échangeur de chaleur (2).

18. Échangeur de chaleur selon les revendications précédentes, **caractérisé en ce que** les côtés larges (55) des tuyaux d'échangeur de chaleur (2) sont pourvus dans la région du premier plan de raccordement (40) de formations supplémentaires (56, 57), des tuyaux d'échangeur de chaleur adjacents (2) avec les formations supplémentaires (57 ou 56) s'appliquant les uns contre les autres et la hauteur des formations supplémentaires (57) et la hauteur du relief (50) coïncidant, afin de fournir les canaux d'écoulement (51) entre les tuyaux d'échangeur de chaleur (2).

19. Échangeur de chaleur selon la revendication 18, **caractérisé en ce que** les reliefs supplémentaires (57) sont disposés dans la région de l'entrée ou de la sortie des canaux d'écoulement (51) et divisent l'écoulement de telle sorte qu'une partie de l'écoulement soit orientée par exemple vers le fond de tuyau (22) afin de le refroidir.

20. Échangeur de chaleur selon les revendications 18 et 19, **caractérisé en ce que** les reliefs (56) sont disposés de manière rassemblée en groupes et présentent des formes judicieuses.

21. Échangeur de chaleur selon l'une quelconque des revendications précédentes, **caractérisé en ce que** le caisson collecteur (1) est réalisé de préférence en plusieurs parties, celui-ci présentant un caisson collecteur d'entrée ou de sortie (1b) pour l'un des fluides, lequel est réalisé de préférence à la manière d'un diffuseur et un caisson collecteur d'entrée ou de sortie (1a) pour l'autre fluide, lequel s'étend sur une certaine portion longitudinale (5) de l'extrémité (4) de la pile des tuyaux d'échangeur de chaleur (2).

22. Échangeur de chaleur selon l'une quelconque des revendications précédentes, **caractérisé en ce que** l'échangeur de chaleur est utilisé en tant qu'échangeur de chaleur à gaz d'échappement refroidi au moyen d'un liquide dans des installations de recirculation de gaz d'échappement de véhicules automobiles ou en tant que refroidisseur d'air de suralimentation.
